## Europäisches Patentamt
## European Patent Office
## Office européen des brevets

(19)

(11) Veröffentlichungsnummer: **0 052 214**
**B1**

(12)

# EUROPÄISCHE PATENTSCHRIFT

(45) Veröffentlichungstag der Patentschrift:
01.02.84

(21) Anmeldenummer: 81107887.2

(22) Anmeldetag: 03.10.81

(51) Int. Cl.³: **C 09 J 3/16**, C 08 L 75/04,
C 08 L 75/06, C 08 L 33/00,
C 08 J 5/12, B 29 H 9/10

(54) Modifizierte Polyurethan-Klebstoff-Mischungen und deren Verwendung zum Verkleben von vulkanisierten und nicht-vulkanisierten Natur- und Synthesekautschuken.

(30) Priorität: 14.11.80 DE 3042961

(43) Veröffentlichungstag der Anmeldung:
26.05.82 Patentblatt 82/21

(45) Bekanntmachung des Hinweises auf die Patenterteilung:
01.02.84 Patentblatt 84/5

(84) Benannte Vertragsstaaten:
DE FR IT

(56) Entgegenhaltungen:
DE - A - 1 694 315
DE - A - 2 113 865

(73) Patentinhaber: BASF Aktiengesellschaft,
Carl-Bosch-Strasse 38, D-6700 Ludwigshafen (DE)

(72) Erfinder: Bueltjer, Uwe, Dr., Dagobertstrasse 8,
D-6700 Ludwigshafen (DE)
Erfinder: Maempel, Lothar, Dr., Spraulache 12 B,
D-6831 Bruehl (DE)
Erfinder: Fuessl, Ruediger, Neubergstrasse 30,
D-6730 Neustadt (DE)
Erfinder: Zettl, Alexander, Homburger Strasse 5,
D-6700 Ludwigshafen (DE)
Erfinder: Hambrecht, Juergen, Dr., Werderstrasse 30,
D-6900 Heidelberg (DE)

## Modifizierte Polyurethan-Klebstoff-Mischungen und deren Verwendung zum Verkleben von vulkanisierten und nicht-vulkanisierten Natur- und Synthesekautschuken

Die Erfindung betrifft Polyurethan-Klebstoff-Mischungen, enthaltend

a) hydroxylgruppenhaltige, im wesentlichen lineare Polyester-Polyurethane,
b) 0,5 bis 15 Gew.-Teile pro 100 Gew.-Teile Polyester-Polyurethan, eines statistischen Copolymeren aus olefinisch ungesättigten Monomeren und Maleinsäureanhydrid mit einem Gehalt an polymerisierten Maleinsäureanhydrideinheiten von 0,5 bis 26 Gew.-%,
c) gegebenenfalls Zusatzstoffe und organische Lösungsmittel

sowie deren Verwendung zum Verkleben von vulkanisierten und nicht-vulkanisierten Natur- und Synthesekautschuken mit sich selbst und anderen Werkstoffen.

Die Verwendung von weitgehend linearen hydroxylgruppenhaltigen Polyester-Polyurethanen zum Verkleben von weichmacherhaltigen Polyvinylchloriden, Natur- und Synthesekautschuken mit sich selbst und anderen Werkstoffen ist bekannt und wird beispielsweise in der DE-PS 1 256 822 (GB 1 081 705) beschrieben.

Nachteilig bei diesen Klebstoffen ist eine mangelnde Haftung an insbesondere weichen, transparenten Gummiqualitäten, die nur durch einen aufwendigen, zusätzlichen Arbeitsgang verbessert werden kann. Unter den in der Literatur beschriebenen Vorbehandlungsmethoden der Gummioberfläche seien beispielhaft genannt: Einstreichen der Oberfläche mit oxidierend wirkenden Säuren, wie z. B. Schwefelsäure (DE-PS 807 719), Halogenierung mit Chlor- oder Brom abspaltenden Verbindungen (DE-OS 2 550 823 bzw. US 3 991 255) oder Auftragen eines Vorstrichs aus Polychloropren oder anderen halogenhaltigen Polymeren (US-PS 3 917 742). Durch diese Verfahren lassen sich in der Praxis nur schwer chemische Oberflächenveränderungen der Kautschuke erzielen. Außerdem treten, z. B. bei der Schwefelsäure- und Halogenvorbehandlung, toxische Nebenprodukte auf, die besondere Schutzmaßnahmen erfordern und die Verfahren verteuern.

Zur Beseitigung dieser Nachteile wird in der DE-AS 2 113 631 (US 3 806 486) vorgeschlagen, handelsüblichen Polyester-Polyurethanklebstofflösungen Carbonsäuren einzuverleiben. Durch diese Maßnahme wird ohne aufwendige Vorbehandlung eine beachtliche Haftungsverbesserung an Gummimaterialien erreicht.

Durch Zusatz von Maleinsäure oder Maleinsäureanhydrid kann nach Angaben der DE-PS 1 086 374 (GB 923 085) bei Zweikomponenten-Klebstoffen die Adhäsion des Klebstoffes an schwer zu verklebenden Materialien verbessert und eine Erhöhung der Viskosität der Polyester-Polyurethankomponente verhindert werden. Nachteilig an diesen Verfahren ist jedoch, daß durch die zugesetzten Carbonsäuren und -derivate die Polyurethane, insbesondere in der Wärme und bei relativ hoher Luftfeuchtigkeit, hydrolytisch gespalten und dadurch die Lagerstabilität der Klebstoffe sowie die Beständigkeit der Verklebung vermindert wird.

Die Verbesserung der Haftung von Polyurethanen an verschiedenen Werkstoffen durch Verwendung von Dihydroxy-polyurethanen, die eingebaute ionische und Carboxylgruppen enthalten, wird in der EP-OS 548 beschrieben. Durch den Einbau der ionischen Gruppen wird jedoch nicht nur die Adhäsion des Polyurethan-Klebstoffes verbessert, sondern es verändern sich auch andere Eigenschaften, wie z. B. die Lösungsaktivität und Wärmestandfestigkeit. Ferner wird der Klebstoff erheblich verteuert, da die speziellen Polyole für diesen Zweck nach einem besonderen Verfahren hergestellt werden müssen. Eine große Typenvielfalt wird nicht ermöglicht.

Aufgabe der vorliegenden Erfindung war es, die obengenannten Nachteile zu überwinden und Polyurethan-Klebstoffe mit verbesserter Haftung zu entwickeln, die insbesondere zum Verkleben von vulkanisierten und nicht-vulkanisierten Natur- und Synthesekautschuken mit sich selbst und anderen Werkstoffen geeignet sind.

Diese Aufgabe konnte überraschenderweise gelöst werden durch Polyurethan-Klebstoff-Mischungen, die enthalten

a) hydroxylgruppenhaltige, im wesentlichen lineare Polyester-Polyurethane
b) 0,5 bis 15 Gew.-Teile pro 100 Gew.-Teile der Polyester-Polyurethane, eines Copolymeren aus olefinisch ungesättigten Monomeren und Maleinsäureanhydrid mit einem Gehalt an polymerisierten Maleinsäureanhydrideinheiten von 0,5 bis 26 Gew.-%, bezogen auf das Gesamtgewicht des Copolymeren, und einer Viskositätszahl von 35 bis 80 und
c) gegebenenfalls Zusatzstoffe und organische Lösungsmittel.

Durch die Zugabe der obengenannten Copolymeren (b) mit einem Gehalt an polymerisierten Maleinsäureanhydrideinheiten von 0,5 bis 26 Gew.-%, bezogen auf das Gesamtgewicht in einer Menge von 0,5 bis 15 Gew.-Teilen pro 100 Gew.-Teilen Polyester-Polyurethan (a), werden Polyurethan-Klebstoff-Mischungen erhalten, die die Adhäsion zwischen den Werkstoffen, insbesondere vulkanisierten und nicht-vulkanisierten Natur- oder Synthesekautschuken und den Klebstoffen stark verbessert, so daß Werte erreicht werden, die nahezu der Kohäsion des Polyurethan-Klebbstoffes entsprechen. Eine Verringerung der Viskosität der Polyurethan-Klebstoff-Mischung — ein Index für den Abbau der Polyester-Polyurethan durch Hydrolyse und damit verbunden eine Abnahme der Adhäsion — wurde nicht beobachtet.

Die Verwendung von hydroxylgruppenhaltigen, im wesentlichen linearen Polyester-Polyurethanen (a) für die Herstellung von Klebstoffen ist bekannt; hierbei handelt es sich um Polyadditionsprodukte von im wesentlichen linearen Polyester-polyolen, gegebenenfalls Kettenverlängerungsmitteln und organischen Diisocyanaten.

Geeignete im wesentlichen lineare Polyester-polyole im Sinne der Erfindung sind solche mit einer Funktionalität von 2 bis maximal 4, insbesondere von 2 und Molekulargewichten von 600 bis 6000, vorzugsweise von 1200 bis 4000, die durch Polykondensation von Alkandicarbonsäuren mit 4 bis 12, vorzugsweise 6 bis 10 Kohlenstoffatomen und Alkandiolen mit 2 bis 10, vorzugsweise 4 bis 6 Kohlenstoffatomen, oder von geradkettigen Hydroxyalkanmonocarbonsäuren mit mindestens 5 Kohlenstoffatomen, wie z. B. ε-Hydroxycapronsäure, sowie durch Polymerisation von Lactonen, wie z. B. ε-Caprolacton, hergestellt werden. Beispielhaft genannt seien als Alkandicarbonsäuren Bernstein-, Pimelin-, Kork-, Azelain-, Sebacin- und vorzugsweise Adipinsäure und als Alkandiole Ethandiol, Propandiol-1,3 und vorzugsweise Butandiol-1,4, Pentandiol-1,5 und Hexandiol-1,6.

Vorzugsweise verwendet werden Polyester-polyole aus Adipinsäure und Butandiol-1,4 und/oder Hexandiol-1,6, ε-Hydroxycapronsäure und ε-Caprolacton.

Obwohl die Mitverwendung von Kettenverlängerungsmittel zur Herstellung der Polyester-Polyurethane (a) nicht zwingend erforderlich ist, werden diese vielfach mitverwendet. Als Kettenverlängerungsmittel kommen insbesondere Diole oder Diol-Mischungen mit Molekulargewichten von 62 bis 300, vorzugsweise 62 bis 150 in Betracht. Geeignete Diole sind z. B. Esterdiole, wie Terephthalsäurebis (-2-hydroxyethyl)-ester, Etherdiole, wie Hydrochinon- bis (-2-hydroxyethyl)-ether und vorzugsweise Alkandiole mit 2 bis 8, insbesondere 4 bis 6 Kohlenstoffatomen, wie Ethandiol, Propandiol-1,3, Pentandiol-1,5 und vorzugsweise Butandiol-1,4 und Hexandiol-1,6. Sofern Kettenverlängerungsmittel mitverwendet werden, werden pro Mol Polyesterpolyol 0,01 bis 1, vorzugsweise 0,3 bis 0,7 Mol eines Kettenverlängerungsmittels bzw. 0,02 bis 2, vorzugsweise 0,6 bis 1,4 Mol einer Mischung aus zwei Kettenverlängerungsmitteln, z. B. einer Butandiol-1,4-Hexandiol-1,6-Mischung, eingesetzt.

Als organische Diisocyanate eignen sich Verbindungen der Formel A (NCO)$_2$, in welcher A bedeutet: einen aliphatischen Kohlenwasserstoffrest mit 4 bis 6, vorzugsweise 6 Kohlenstoffatomen, einen cycloaliphatischen Rest mit 6 bis 15, vorzugsweise 6 bis 13 Kohlenstoffatomen, einen araliphatischen Rest mit 8 Kohlenstoffatomen, einen araliphatischen Rest mit 8 Kohlenstoffatomen und vorzugsweise einen aromatischen Rest mit 7 bis 15, vorzugsweise 7 bis 13 Kohlenstoffatomen.

Beispielhaft genannt seien: Hexamethylen-diisocyanat-1,6, 1,4-Cyclohexan-diisocyanat, 1-Methyl-2,4-bzw. 2,6-diisocyanato-cyclohexan, 1-Isocyanato-3-isocyanato-methyl-3,5,5-trimethyl-cyclohexan, Xylylen-diisocyanat, 2,4- bzw. 2,6-Toluylendiisocyanat und 2,4'- bzw. 4,4'-Diphenylmethan-diisocyanât. Die genannten Diisocyanate können einzeln oder als Mischungen eingesetzt werden. Vorzugsweise verwendet werden 2,4- und 2,6-Toluylendiisocyanat und insbesondere 4,4'Diphenylmethan-diisocyanat.

Die erfindungsgemäß verwendbaren Polyester-Polyurethane (a) können in der Schmelze oder in Lösung in Gegenwart von inerten Lösungsmitteln nach dem Präpolymer- und vorzugsweise dem wirtschaftlichen one shot-Verfahren hergestellt werden. Als inerte Lösungsmittel eignen sich beispielsweise Toluol, Methylethylketon, Ethylacetat und Dimethylformamid sowie Mischungen von derartigen Lösungsmitteln. Hierbei werden die Diisocyanate und Polyester-polyole bzw. Mischungen aus Polyester-polyolen und Kettenverlängerungsmittel bei Temperaturen von 50 bis 200°C, vorzugsweise 80° bis 150°C und in Reaktionszeiten von 0,1 bis 4 Stunden, vorzugsweise 0,2 bis 2 Stunden in solchen Mengen zur Reaktion gebracht, daß das Verhältnis von NCO- : OH-Gruppen 0,9 bis 0,99 : 1, vorzugsweise 0,95 bis 0,99 : 1 beträgt, so daß stets Polyester-Polyurethane mit endständigen Hydroxylgruppen gebildet werden.

Wesentliches Merkmal der vorliegenden Erfindung ist der Zusatz von 0,5 bis 15 Gew.-Teilen, vorzugsweise von 2 bis 8 Gew.-Teilen, pro 100 Gew.-Teilen Polyester-Polyurethan (a), eines Copolymeren (b) aus olefinisch ungesättigten Monomeren und Maleinsäureanhydrid mit einer Viskositätszahl (analog DIN 53 726) von 35 bis 80, vorzugsweise 60 bis 80. Der Gehalt an polymerisierten Maleinsäureanhydrideinheiten, die in statistischer Verteilung im Copolymeren gebunden sind, beträgt 0,5 bis 26 Gew.-%, bezogen auf das Gesamtgewicht des Copolymeren, wobei als Zusatz zu Polyester-Polyurethanen auf Basis von Mischungen aus Polyester-polyolen und Kettenverlängerungsmitteln vorzugsweise Copolymere mit einem Gehalt an polymerisierten Maleinsäureanhydrideinheiten von 6 bis 20 Gew.-%, insbesondere 8 bis 18 Gew.-%, bezogen auf das Gewicht des Copolymeren und bei Polyester-Polyurethanen, die ohne Zusatz von Kettenverlängerungsmitteln hergestellt werden, Copolymere mit einem Gehalt an polymerisierten Maleinsäureanhydrideinheiten von vorzugsweise 3 bis 15 Gew.-%, bezogen auf das Gewicht des Copolymeren Anwendung finden.

Die Copolymeren (b), können den Polyester-Polyurethanen (a) in der Schmelze einverleibt werden, so daß die Copolymeren im festen Polyester-polyurethan gelöst oder dispergiert sind oder sie können mit der Polyester-Polyurethan-Lösung gemischt werden.

Wie bereits dargelegt, werden die erfindungsgemäß verwendbaren Copolymeren (b) aus

3

Maleinsäureanhydrid und olefinisch ungesättigten Monomeren hergestellt. Geeignete olefinisch ungesättigte Monomere sind beispielsweise α-Methylstyrol, 2-Chlorstyrol, Divinylbenzol, Vinyltoluol, Acrylnitril, Vinylacetat, Isobuten und vorzugsweise Styrol. Die Herstellung der Copolymeren wird beispielsweise in der US-PS 2 989 517 beschrieben. Vorzugsweise verwendet werden Styrol-Maleinsäureanhydrid-Copolymere.

Zur Verwendung als Polyurethan-Klebstoff können die Mischungen aus (a) Polyester-Polyurethanen und (b) Copolymeren als Schmelze oder in Form von Lösungen in geeigneten Lösungsmitteln, beispielsweise der obengenannten Art, verarbeitet werden. Bevorzugt werden die Polyurethan-Klebstoff-Mischungen in Form von 10 bis 40gew.-%igen Lösungen in polaren organischen Lösungsmitteln, wie z. B. Aceton, Essigester und vorzugsweise Methylethylketon angewandt. Die Viskosität der Polyurethan-Klebstoff-Mischungen kann durch Variation der Lösungskonzentration den speziellen Erfordernissen des Klebeverfahrens oder den zu verklebenden Materialien angepaßt werden. Geeignete Polyurethan-Klebstoff-Mischungen werden durch einfaches Auflösen der Komponenten (a) und (b) in dem polaren Lösungsmittel oder Lösungsmittelgemisch bei Raumtemperatur oder mäßig erhöhter Temperatur, beispielsweise bei Temperaturen von 20 bis 40°C, erhalten.

Zur Erzielung spezieller Eigenschaften, z. B. zur Verlängerung der Kontaktbindezeit können den Polyurethan-Klebstoff-Mischungen gegebenenfalls Zusatzstoffe einverleibt werden. Als Zusatzstoffe in Betracht kommen beispielsweise natürliche oder synthetische Harze, wie z. B. Phenolharze, Ketonharze, Kolophoniumderivate, Phthalatharze, Acetyl- oder Nitrocellulose oder andere Stoffe. Der Zusatz von Vernetzungsmitteln, beispielsweise von höherfunktionellen Polyisocyanaten, wie z. B. Phosphorsäute-tris-isocyanatophenylester oder Tris-isocyanato-touyl-isocyanurat, ist hingegen nicht erforderlich.

Zur Verarbeitung werden die als Schmelze oder vorzugsweise in Lösung vorliegenden Polyurethan-Klebstoff-Mischungen auf die gegebenenfalls gerauhten oder in anderer Weise vorbehandelten, zu verklebenden Werkstoffoberflächen aufgebracht. Dies kann mit Hilfe einer Walze, Pinsel, Spachtel, Spritzpistole oder einer anderen Vorrichtung geschehen. Die Aufstriche werden nach dem weitgehenden Abdampfen der Lösungsmittel zur Aktivierung auf Temperaturen von ungefähr 50° bis 150°C, vorzugsweise 60 bis 100°C kurzzeitig erhitzt und anschließend unter einem Preßdruck von ungefähr 0,2 bis 0,6 N/mm² verklebt.

Mit den erfindungsgemäßen Polyurethan-Klebstoff-Mischungen, die vorteilhafterweise in einer Menge von 60 bis 110 g/m² zu verklebenden Oberfläche aufgebracht werden, können zahlreiche Werkstoffe, wie z. B. Papier, Pappe, Holz, Holzschliff, Holzspäne, Metall, Leder u. a. mit hoher Festigkeit verklebt werden. Vorzugsweise verwendet werden die erfindungsgemäßen Produkte jedoch zum Verkleben von vulkanisierten und nicht-vulkanisierten Natur- oder Synthesekautschuken bzw. Mischungen von diesen mit Regeneraten. Als Synthesekautschuk kommen beispielsweise die verschiedenen Mischpolymerisate des Butadiens mit Styrol, Acrylnitril, Isobuten sowie Poly-cis-isopren und Poly-cis-butadien in Betracht.

Beispiele

Allgemeine Vorschrift zur Herstellung der Copolymeren

Eine Mischung aus Maleinsäureanhydrid und einem olefinisch ungesättigten Monomeren wird in Gegenwart von 0,1 Gew.-%, bezogen auf das Monomerengewicht, Azobisisobutyronitril kontinuierlich bei Temperaturen von 105° bis 125°C polymerisiert und anschließend die restlichen Monomeren im Vakuum abgetrennt.

Die eingesetzten olefinisch ungesättigten Monomeren, die Mengenverhältnisse sowie die Kennzahlen der erhaltenen Copolymeren sind in Tabelle I zusammengefaßt:

Tabelle I

| Beispiele | Maleinsäure-anhydrid [g] | Olefinisch unges. Monomer Art | [g] | Copolymer Maleinsäure-anhydridgehalt [Gew.-%] | Viskositätszahl analog DIN 53 276 (0,5 g Copoly-merisat in 100 ml Dimethylformamid) |
|---|---|---|---|---|---|
| 1 | 5 | Styrol | 95 | 5 | 80 |
| 2 | 10 | Styrol | 90 | 10 | 80 |
| 3 | 20 | Styrol | 80 | 20 | 80 |
| 4 | 26 | Styrol | 74 | 26 | 80 |
| 5 | 10 | Styrol | 90 | 10 | 65 |
| 6 | 10 | Isobuten | 90 | 10 | 70 |

Allgemeine Vorschrift zur Herstellung der Polyurethan-Klebstoff-Mischung

Herstellungsvariante I

Das Polyester-polyol oder die Mischung aus Polyester-polyol und Kettenverlängerungsmittel wird bei 100°C unter vermindertem Druck (0,1 bar) in 2 Stunden entwässert, danach bei 110°C mit dem organischen Diisocyanat gemischt und ungefähr 4 Minuten gerührt. Die heiße Schmelze wird in eine Teflonschale gegossen und bei 120°C im Heizschrank 24 Stunden getempert. Nach dem Abkühlen auf Raumtemperatur erhält man ein feste festes Polyester-Polyurethan, das in Methylethylketon gelöst und mit einer Lösung des Copolymeren in Methylethylketon gemischt wird.

Herstellungsvariante II

Das Polyester-polyol oder die Mischung aus Polyester-polyol und Kettenverlängerungsmittel wird bei 100°C unter vermindertem Druck (0,1 bar) in 2 Stunden entwässert und danach mit dem organischen Diisocyanat bei 110°C gemischt. Das Copolymere wird in Pulverform in das Reaktionsgemisch einverleibt und durch intensives Rühren gleichmäßig verteilt. Die heiße Schmelze wird nach 10 bis 15 Minuten in eine Teflonschale gegossen und bei 120°C im Heizschrank 24 Stunden getempert. Nach dem Abkühlen erhält man eine feste Polyesterpolyol-Copolymer-Mischung, die in Methylethylketon gelöst wird.

Die Art und Mengen der verwendeten Ausgangskomponenten sowie die Herstellungsvariante wird die Tabelle II zusammengefaßt.

In Tabelle II bedeuten die folgenden Abkürzungen:

PES: Polyester-polyol
A: Polyester-polyol aus Adipinsäure und Butandiol-1,4 mit einer OH-Zahl von 47
B: Polyester-polyol aus Adipinsäure und Hexandiol mit einer OH-Zahl von 45
BuOH: Butandiol-1,4
TDI: Mischung aus 2,4- und 2,6-Toluylen-diisocyanat im Gewichtsverhältnis 80 : 20
MDI: 4,4'-Diphenylmethan-diisocyanat
MEK: Methylethylketon

Unter Verwendung der in Tabelle II beschriebenen Lösungen wurden RCariflex 72/220 Ara (Hersteller: Shell) und RNoratestgummi (Hersteller: Freudenberg) verklebt.

Hierzu wurden die Werkstoffe Cariflex 72/20 Ara bzw. Noratestgummi mit 100 g/m² der Polyurethan-Klebstoff-Mischung beschichtet und das Lösungsmittel in 4 Stunden bei 25°C verdunstet. Die Klebstoffschicht wurde mit einer IR-Lampe bei 80°C 6 Sekunden bestrahlt, wodurch der Klebstoff aktiviert wird, und danach die Werkstoffe unter einem Druck von 0,4 N/mm² zusammengepreßt. Nach 24stündiger Lagerung bei 23°C wurden die in Tabelle II zusammengestellten Schälwerte (nach DIN 53 273) in N/cm gemessen.

5

Tabelle II

| Beispiel | PES Art | Menge [g] | BuOH [g] | Diisocyanat Art | Menge [g] | Copolymer gemäß Beispiel | Menge [g] | Klebstofflösung Lösungs- mittel | Fest- gehalt [Gew.-%] | Herstel- lungs- variante | Verklebung Cariflex 72/20 Ara [N/cm] | Noratest- gummi [N/cm] |
|---|---|---|---|---|---|---|---|---|---|---|---|---|
| 1 | A | 1000 | — | TDI | 72 | — | — | MEK | 15 | — | 22,7 | 28,0 |
| 2 | A | 1000 | — | TDI | 72 | 1 | 53,6 | MEK | 15 | I | 31,7 | 29,6 |
| 3 | A | 1000 | — | TDI | 72 | 1 | 53,6 | MEK | 15 | II | 32,0 | 29,1 |
| 4 | A | 1000 | — | TDI | 72 | 2 | 107,2 | MEK | 15 | I | 37,0 | 45,3 |
| 5 | A | 1000 | — | TDI | 72 | 2 | 107,2 | MEK | 15 | II | 36,8 | 45,7 |
| 6 | A | 1000 | — | TDI | 72 | 3 | 214,4 | MEK | 15 | I | 31,7 | 52,2 |
| 7 | A | 1000 | — | TDI | 72 | 3 | 214,4 | MEK | 15 | II | 31,7 | 52,1 |
| 8 | A | 1000 | — | TDI | 72 | 4 | 278,2 | MEK | 15 | I | 23,0 | 40,7 |
| 9 | A | 1000 | — | TDI | 72 | 4 | 278,2 | MEK | 15 | II | 23,3 | 40,7 |
| 10 | A | 1000 | — | TDI | 72 | 5 | 107,2 | MEK | 15 | I | 29,7 | 41,1 |
| 11 | A | 1000 | — | TDI | 72 | 5 | 107,2 | MEK | 15 | II | 29,7 | 41,0 |
| 12 | A | 1000 | — | TDI | 72 | 6 | 107,2 | MEK | 15 | I | 26,7 | 30,4 |
| 13 | A | 1000 | — | TDI | 72 | 6 | 107,2 | MEK | 15 | II | 26,5 | 30,4 |
| 14 | B | 1000 | 19,6 | TDI | 153,5 | — | — | MEK | 15 | — | 34,7 | 58,7 |
| 15 | B | 1000 | 19,6 | TDI | 153,5 | 1 | 58,7 | MEK | 15 | I | 41,7 | 78,3 |
| 16 | B | 1000 | 19,6 | TDI | 153,5 | 1 | 58,7 | MEK | 15 | II | 41,7 | 78,9 |
| 17 | B | 1000 | 19,6 | TDI | 153,5 | 2 | 117,3 | MEK | 15 | I | 38,7 | 96,4*) |
| 18 | B | 1000 | 19,6 | TDI | 153,5 | 2 | 117,3 | MEK | 15 | II | 38,6 | 95,0*) |
| 19 | B | 1000 | 19,6 | TDI | 153,5 | 3 | 234,6 | MEK | 15 | I | 36,7 | 82,2 |

0 052 214

Fortsetzung

| Beispiel | PES Art | Menge [g] | BuOH [g] | Diisocyanat Art | Menge [g] | Copolymer gemäß Beispiel | Menge [g] | Klebstofflösung Lösungs- mittel | Fest- gehalt [Gew.-%] | Herstel- lungs- variante | Verklebung Cariflex 72/20 Ara [N/cm] | Noratest- gummi [N/cm] |
|---|---|---|---|---|---|---|---|---|---|---|---|---|
| 20 | B | 1000 | 19,6 | TDI | 153,5 | 3 | 234,6 | MEK | 15 | II | 36,5 | 82,3 |
| 21 | B | 1000 | ·19,6 | TDI | 153,5 | 4 | 305,0 | MEK | 15 | I | 32,7 | 82,1 |
| 22 | B | 1000· | 19,6 | TDI | 153,5 | 4 | 305,0 | MEK· | 15 | II | 33,0 | 82,1 |
| 23 | B | 1000 | 19,6 | TDI | 153,5 | 5 | 117,3 | MEK | 15 | I | 37,0 | 86,0 |
| 24 | B | 1000 | 19,6 | TDI | 153,5 | 5 | 117,3 | MEK | 15 | II | 37,0 | 86,2 |
| 25 | B | 1000 | 19,6 | TDI | 153,5 | 6 | 117,3 | MEK | 15 | I | 35,2 | 82,6 |
| 26 | B | 1000 | 19,6 | TDI | 153,5 | 6 | 117,3 | MEK | 15 | II | 35,2 | 82,0 |

*) Materialbruch

## Patentansprüche

1. Polyurethan-Klebstoff-Mischungen enthaltend

a) hydroxylgruppenhaltige, im wesentlichen lineare Polyester-Polyurethane,
b) 0,5 bis 15 Gew.-Teile pro 100 Gew.-Teile Polyester-Polyurethan, eines Copolymeren aus olefinisch ungesättigten Monomeren und Maleinsäureanhydrid mit einem Gehalt an polymerisierten Maleinsäureanhydrideinheiten von 0,5 bis 26 Gew.-%, bezogen auf das Gesamtgewicht des Copolymeren, und einer Viskositätszahl von 35 bis 80 und
c) gegebenenfalls Zusatzstoffe und organische Lösungsmittel.

2. Polyurethan-Klebstoff-Mischungen, bestehend aus Lösungen in organischen Lösungsmitteln von

a) hydroxylgruppenhaltigen, im wesentlichen linearen Polyester-Polyurethanen und
b) 0,5 bis 15 Gew.-Teilen pro 100 Gew.-Teile Polyester-Polyurethan, eines Copolymeren aus olefinisch ungesättigten Monomeren und Maleinsäureanhydrid mit einem Gehalt an polymerisierten Maleinsäureanhydrideinheiten von 0,5 bis 26 Gew.-%, bezogen auf das Gewicht des Copolymeren, und einer Viskositätszahl von 35 bis 80.

3. Polyurethan-Klebstoff-Mischungen nach Anspruch 1 und 2, dadurch gekennzeichnet, daß als Copolymere ein Styrol-Maleinsäureanhydrid-Copolymerisat verwendet wird.
4. Polyurethan-Klebstoff-Mischungen bestehend aus Lösungen in organischen Lösungsmitteln von

a) hydroxylgruppenhaltigen, im wesentlichen linearen Polyester-polyurethanen und

b) 2 bis 8 Gew.-Teilen pro 100 Gew.-Teilen Polyester-Polyurethan, eines Styrol-Maleinsäureanhydrid-Copolymerisats mit einem Gehalt an polymerisierten Maleinsäureanhydrideinheiten von 0,5 bis 26 Gew.-%, bezogen auf das Gesamtgewicht des Copolymeren, und einer Viskositätszahl von 35 bis 80.

5. Verwendung von Polyurethan-Klebstoff-Mischungen nach den Ansprüchen 1 bis 4 zum Verkleben von vulkanisierten und nicht-vulkanisierten Natur- und Synthesekautschuken mit sich selbst oder anderen Werkstoffen.

## Claims

1. A polyurethane adhesive composition containing

(a) a hydroxyl-containing, essentially linear polyester polyurethane,
(b) 0.5 to 15 parts by weight, per 100 parts by weight of polyester polyurethane, of a copolymer of olefinically unsaturated monomers and maleic anhydride, the copolymer containing from 0.5 to 26% by weight, based on the total weight of the copolymer, of polymerized maleic anhydride units, and having a viscosity number of from 35 to 80, and
(c) if desired, additives and organic solvents.

2. A polyurethane adhesive composition consisting of a solution of

(a) a hydroxyl-containing, essentially linear polyester polyurethane, and
(b) 0.5 to 15 parts by weight, per 100 parts by weight of polyester polyurethane, of a copolymer of olefinically unsaturated monomers and maleic anhydride, the copolymer containing from 0.5 to 26% by weight, based on the weight of the copolymer, of polymerized maleic anhydride units, and having a viscosity number of from 35 to 80

in organic solvents.
3. A polyurethane adhesive composition as claimed in claims 1 and 2, wherein the copolymer used is a styrene/maleic anhydride copolymer.
4. A polyurethane adhesive composition consisting of a solution of

(a) a hydroxyl-containing, essentially linear polyester polyurethane,
(b) 2 to 8 parts by weight, per 100 parts by weight of polyester polyurethane, of a styrene/maleic anhydride copolymer containing from 0.5 to 26% by weight, based on the total weight of the copolymer, of polymerized maleic anhydride units, and having a viscosity number of from 35 to 80

in organic solvents.

5. The use of a polyurethane adhesive composition as claimed in claims 1 to 4 for sticking vulcanized and non-vulcanized natural and synthetic rubbers together or to other materials.


**Revendications**

1. Mélanges adhésifs à base de polyuréthane, contenant

a) des polyesters-polyuréthanes, en principe linéaires, à groupes hydroxyle,
b) 0,5 à 15 parties en poids, pour 100 parties en poids de polyester-polyuréthane, d'un copolymère de monomères à insaturation oléfinique et d'anhydride maléique, d'une teneur en motifs anhydride maléique polymérises de 0,5 à 26% en poids, rapportée au poids total du polymère, et d'un indice de viscosité de 35 à 80 et
c) éventuellement des additifs et solvants organiques.

2. Mélanges adhésifs à base de polyuréthane, constitués par des solutions, dans des solvants organiques, de:

a) des polyesters-polyuréthanes, en principe linéaires à groupes hydroxyle,
b) 0,5 à 15 parties en poids, pour 100 parties en poids de polyester-polyuréthane, d'un copolymère de monomères à insaturation oléfinique et d'anhydride malique d'une teneur en motifs anhydride maléique polymérisés de 0,5 à 26% en poids, rapportée au poids total du polymère, et d'un indice de viscosité de 35 à 80.

3. Mélanges adhésifs à base de polyuréthane selon la revendication 1 et 2, caractérisé par le fait que l'on utilise, comme copolymère, un copolymérisat styrène-anhydride maléique.

4. Mélanges adhésifs à base de polyuréthane, constitués par des solutions, dans des solvants organiques, de

a) des polyesters-polyuréthanes, en principe linéaires, à groupes hydroxyle, et
b) 2 à 8 parties en poids, pour 100 parties en poids de polyester-polyuréthane, d'un copolymérisat styrène-anhydride maléique, d'une teneur en motifs anhydride maléique polymérisés de 0,5 à 26% en poids, rapportée au poids total du polymère, et d'un indice de viscosité de 35 à 80.

5. Utilisation de mélanges adhésifs à base de polyuréthane, selon les revendications 1 à 4, pour coller des caoutchoucs naturels ou de synthèse, vulcanisés ou non, avec les mêmes matières ou d'autres.